Europäisches Patentamt

**European Patent Office**

Office européen des brevets

(11) Publication number: **0 100 240**
**A2**

## (12) EUROPEAN PATENT APPLICATION

(21) Application number: **83304343.3**

(22) Date of filing: **27.07.83**

(51) Int. Cl.³: **G 06 F 3/04**

(30) Priority: **28.07.82 JP 131605/82**

(43) Date of publication of application: **08.02.84**
**Bulletin 84/6**

(84) Designated Contracting States: **DE FR GB**

(71) Applicant: **FANUC LTD, 5-1, Asahigaoka 3-chome**
**Hino-shi, Tokyo 191 (JP)**

(72) Inventor: **Kishi, Hajimu,**
**Hinohirayamadai-Jutaku 1104 6-7-8, Asahigaoka,**
**Hino-shi Tokyo (JP)**
Inventor: **Tanaka, Kunio, 5-8-13, Tamagawa-cho,**
**Akishima-shi Tokyo (JP)**

(74) Representative: **Billington, Lawrence Emlyn et al,**
**HASELTINE LAKE & CO Hazlitt House 28 Southampton**
**Buildings Chancery Lane, London WC2A 1AT (GB)**

(54) **System creation method and apparatus.**

(57) A method and apparatus for system creation in which a processor (10) exchanges information with input/output units (2a, 2b) in accordance with a control program stored in a memory (11). The control program is stored in a memory in the form of a basic program (11m) and plural optional programs (11a, 11b, 11c), and the processor (10) discriminates the hardware complexity level of the connected input/output units (2a, 2b) and decides which of the plural optional programs (11a, 11b, 11c) are to be executed.

ACTORUM AG

## SYSTEM CREATION METHOD AND APPARATUS

This invention relates to a method and apparatus for use in creating a system capable of having different hardware configurations.

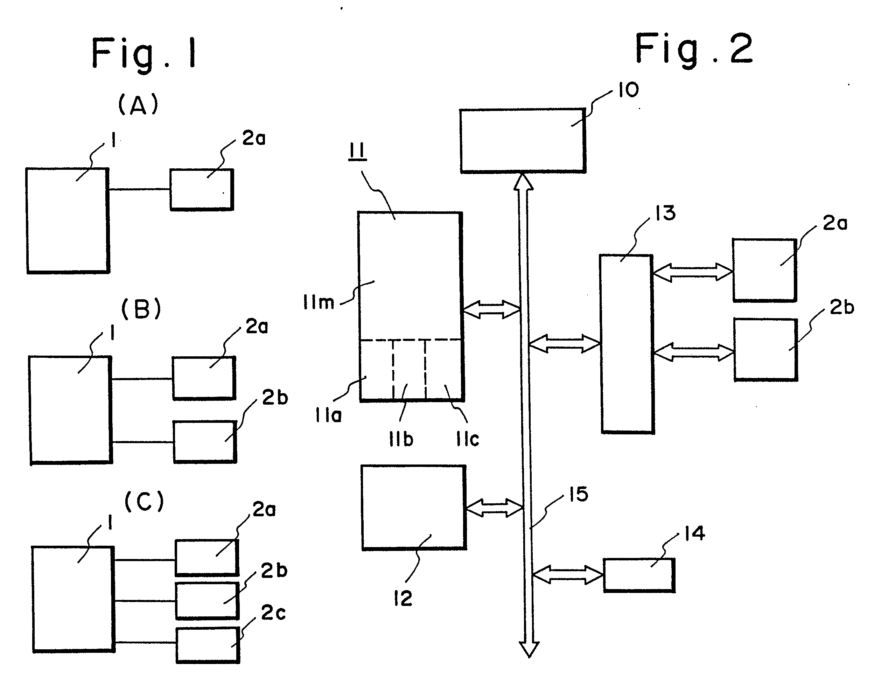

A data processing system composed essentially of a processor and memory requires the connection of such input/output units as a magnetic disk, magnetic tape, printer and display. For example, in order to convert a given system into a series or model line to satisfy diverse user needs, a single input/output unit 2a may be connected to a computer 1 comprising a processor and memory to provide an arrangement having a low level of complexity, as shown in Fig. 1(A). Similarly, to furnish arrangements having medium and high levels of complexity, two input/output units 2a, 2b [Fig. 1(B)], or three input/output units 2a, 2b, 2c [Fig. 1(C)], may be connected to the computer 1, respectively. Each arrangement will have a different processing function, allowing selection of the one best suited to a user's needs. Further, a given system following purchase may be expanded by the connection of input/output units of a number desired by the user. Various arrangements of the type shown in Fig. 1 are possible, each having a

-2-

different level of hardware complexity. Examples of /systems that permit a change in hardware configuration are data input devices and personal computers which rely upon microcomputers. A system of this type requires a control program for controlling the exchange of information with the hardware connected to the system, the control program differing depending upon the hardware configuration. In the example of Fig. 1, three such control programs would have to be prepared.

Systems employing a processor are finding use in ever more diverse applications. This has been accompanied by control programs of increasing sophistication, so that much time and expense is required for the creation of the pertinent software. It is clear , then, that the creation of a number of different control programs leads to a system which is itself high in cost. Moreover, since control programs have recently come to be available to users in the form of read-only memories and magnetic disks, the manufacturer must produce the different memories and magnetic disks that store these diverse control programs. This is an obstacle to uniformity of production parts and, hence, contributes to the higher cost of the system.

-3-

According to a first aspect of the invention there is provided a system creation method employed by a system comprising a processor, a memory storing a control program executed by the processor, and input/output units, wherein in the method said processor exchanges information with said input/output units in accordance with the control program to execute prescribed processing, characterised in that:

said memory stores a basic program and a plurality of optional programs as the control program, and

said processor discriminates the hardware level complexity of the connected or the to-be-connected input/output units, and thereby decides which of said optional programs are to be rendered effective and which ineffective.

According to a second aspect of the invention there is provided data processing apparatus comprising a processor, a memory for storing a control program to be executed by the processor, and an input/output control means connected to the processor for use in controlling a plurality of input/output devices in dependence upon the processor when it is in use, whereby the processor can exchange information with said input/output units in accordance with a control program to execute prescribed processing, characterised in that the control program comprises a basic program for executing data processing other than control of said input/output units, and a plurality of optional programs for controlling different respective levels of hardware complexity in dependence upon input/output units, the apparatus further comprising discriminating means for discriminating a hardware complexity level thereby to decide which of said optional programs are to be rendered effective and which ineffective.

According to a third aspect of the invention there is provided a system creation method in which a processor exchanges information with input/output units in accordance with a control program stored in a program memory, comprising:

(a) a plurality of input/output units;

(b) an input/output control device provided between the connected input/output units and said processor for controlling each of the input/output units in response to a command from the processor;

(c) a program memory having a basic program for executing data processing other than control of the input/output units, and ranked plurality of optional programs for controlling each of the input/output units, said basic program being stored in a basic storage area, each of said optional programs being stored in a corresponding option storage area;

(d) a setting panel for setting a hardware complexity level at the time of manufacture; and

(e) means for judging hardware complexity level in accordance with the number of connected input/output units, for deciding which of the plural optional programs are to be rendered effective and which ineffective, and for setting an option storage area, corresponding to an ineffective optional program, as a storage area to which access is forbidden.

An example of the present invention may provide a system creation method and apparatus which make it possible to realize a system of low cost through common use of an available control program even when the system is to be used with hardware configurations having different levels of complexity. Thus, one may provide a system creation method and apparatus in which control software is capable of being unified even for hardware having such different levels of complexity.

In an embodiment of the present invention, one provides a system creation method and apparatus of the type in which a processor exchanges information with input/output units in accordance with a control program stored in a memory. The control program is stored in a memory in the form of a basic program and plural optional programs, and the processor discriminates the hardware complexity level of the connected input/output units and decides which of the plural optional programs are to be executed.

Features and advantages of examples of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a diagram useful in describing the subject matter to which the present invention appertains and shows different hardware configurations connected to a computer;

Fig. 2 is a block diagram of an apparatus embodying the present invention;

Fig. 3 is a / diagram useful in describing an embodiment of the present invention;

Fig. 4 is a flowchart of process steps embodying the present invention; and

Fig. 5 is a flowchart of process steps according to another embodiment of the present invention.

With reference to Fig. 2, illustrating an embodiment of apparatus according to the present invention, numeral 10 designates a processor for executing arithmetic and logic operations in accordance with a control program, which is stored in a program memory 11. The control program is composed of a basic program M(m) for executing data processing but not for the control of input/output units, and optional programs A(a), B(b), C(c), arranged according to rank, for controlling each of a plurality of input/output units. The program memory 11 has a basic storage area 11m for storing the basic program M(m), and option storage areas 11a, 11b, 11c for storing the optional programs A(a), B(b), C(c), respectively. A data memory 12 stores the results of the processing performed by the processor 10 in accordance with the control program, as well as data required for processing. An input/output control device 13 is provided between the processor 10 and input/output units 2a, 2b,... connected to the input/output control device, which controls the input/output units 2a, 2b,... in response to a command from the processor 10. A setting panel 14
is provided for/pre setting the level of hardware
complexity at the time of manufacture. Specifically,
when converting the/generalised system into a/specific series or model line,
the setting panel 14 is used to set a complexity level
A in the case of Fig. 1(A), a complexity level B in the
case of Fig. 1(B), and a complexity level C in the case
of Fig. 1(C). The units 10, 11, 12, 13 and 14 are
interconnected by an address/data bus 15.

/One type of operation of the illustrated embodiment will
now be described with reference to the flowchart of
Fig. 4.

The program memory 11 stores the control program
that is necessary for connecting the maximum number
(three in the illustration) of input/output units, as
shown in Fig. 1(C). The basic program is stored in the
basic storage area 11m of the program memory 11, and
the optional programs for controlling the input/output
units 2a, 2b, 2c are stored in the option storage areas
11a, 11b, 11c of the program memory 11, respectively.

When power is introduced from a power supply, the
processor 10 executes processing for reading the basic
program M out of the program memory 11. The beginning
of the basic program accommodates a system creation
program, which is the first program executed by the
processor 10. In accordance with the system creation
program, the processor 10 reads the hardware complexity
level information set by the setting panel 14. In the arrangement of Fig. 2, two input/output units 2a, 2b are provided, so the hardware complexity level B is set at the time of manufacture. The processor 10 discriminates the read hardware level information and decides which of the optional programs is to be executed. Since the hardware complexity level is B in Fig. 2, the processor 10 will decide to execute optional programs A and B but not optional program C. This is accomplished by setting option storage area 11c as an area to which access is forbidden. Therefore, requests will not be accepted from input/output units other than the units 2a, 2b, and data will not be delivered to input/output units other than the units 2a, 2b.

Thus, a desired program is selected in accordance with the hardware complexity level to create the system. Thereafter, the processor 10 executes processing, under the control of the control program, in accordance with requests received from the input/output units. This proceeds in a well-known manner.

In the foregoing embodiment, assume that a user connects the input/output unit 2c to the input/output control device 13 illegally in an attempt to set up the high-level arrangement of Fig. 1(C). The present arrangement will prevent this by forbidding the execution of the optional program C, making it impossible for the input/output unit 2c to operate.

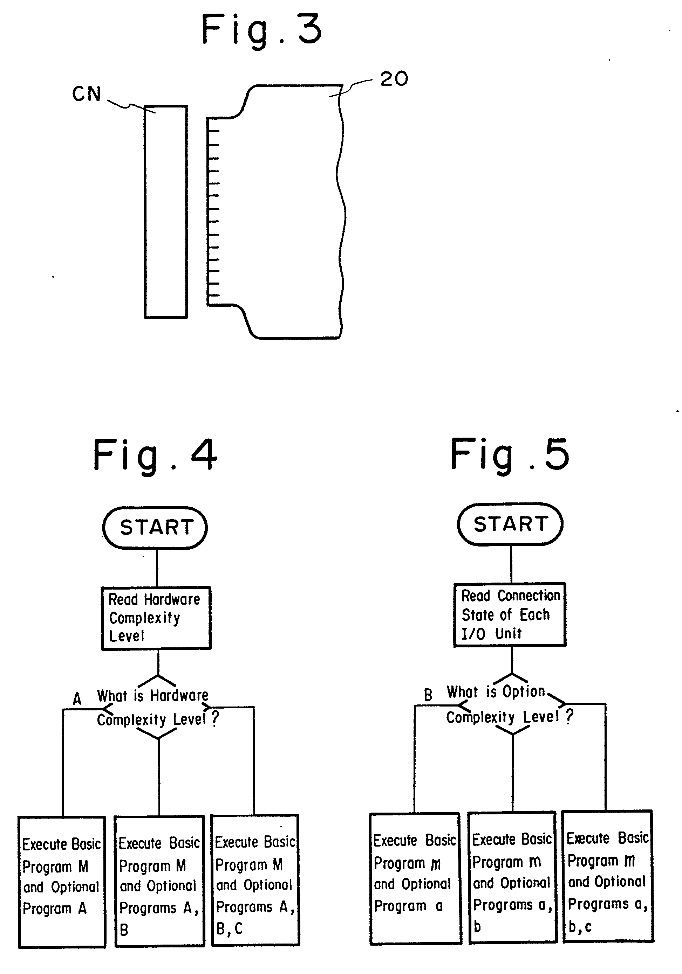

Reference will now be had to Figs. 3 and 5 to describe an example in which options can be added to an existing arrangement.

As shown in Fig. 3, the input/output control device 13 is provided with connectors CN for corresponding input/output units, only one of the connectors being illustrated. A printed circuit board 20 carrying the control circuitry of one of the input/output units (2a) is connected to the corresponding connector CN, and pin connection information is communicated to the processor 10 through the connector CN. The program memory 11 stores the control program that is necessary for connecting the maximum number (three in the illustration) of input/output units, as shown in Fig. 1(C). The basic program is stored in the basic storage area 11m of the program memory 11, and the optional programs for controlling the input/output units 2a, 2b, 2c are stored in the option storage areas 11a, 11b, 11c of the program memory 11, respectively.

When power is introduced from a power supply, the processor 10 executes a system creation program located at the beginning of the basic program and reads out the connection information via the input/output control device 13. Since the two input/output units 2a, 2b are connected to the input/output control device 13 in the arrangement of Fig. 2, the processor 10 discriminates a hardware complexity level (option level) b

corresponding to Fig. 1(B). Figs. 1(A) and 1(C) represent hardware complexity levels a, c, respectively. Accordingly, the processor 10 validates the optional programs a, b and invalidates the optional program c. Then, as described earlier with reference to Fig. 4, the processor sets the option storage area 11c as an area to which access is forbidden, so that requests will not be accepted from input/output units other than the units 2a, 2b. Likewise, data will not be delivered to input/output units other than the units 2a, 2b.

Thus, a desired program is selected in accordance with the hardware (option) complexity level to create the system. Thereafter, the processor 10 executes processing, under the control of the control program, in accordance with requests received from the input/output units. This proceeds in a well-known manner.

In the foregoing, the discrimination of the hardware complexity level for the purpose of establishing a product series or model line, and the discrimination of the hardware complexity level for the purpose of adding options, have been discussed separately. However, these features can be combined. More specifically, each of the optional programs A, B, C for establishing a product series can be divided into three categories Aa, Ab, Ac; Ba, Bb, Bc; Ca, Cb, Cc; respectively, for the purpose of adding options. Then, after the processor first discriminates the hardware complexity level for establishing the product series, which is determined by the hardware complexity level information set by the setting panel 14, one may select an optional program obtained by the program subdivision, which is based on pin connection information mentioned above.

Thus, /the present invention relates to a system in which a processor exchanges information with input/output units in accordance with a control program stored in a memory. The control program is stored in the form of a basic program and plural optional programs, and the processor discriminates the hardware complexity level of the input/output units connected to the system, deciding which of the optional programs is to be executed. Therefore, the control program with which the system comes equipped can be used for different hardware configurations. This reduces greatly the time and cost for program development, thereby making it possible to provide a system at low cost. Furthermore, since a single, common control program is sufficient, only one variety of storage device for storing the program need be prepared when the system is manufactured. This contributes to automation of the manufacturing process and further reduces the cost of the system.

As many apparently widely different embodiments of the present invention can be made without departing from the spirit and scope thereof, it is to be

-12-

understood that the invention is not limited to the specific embodiments thereof except as defined in the appended claims.

In the foregoing, (i) a method and apparatus for discrimination of the hardware complexity level which is determined by the number of types of apparatus attached to the main apparatus in order to establish a product series or model line, and, (ii) a method and apparatus for discrimination of hardware complexity level which is determined by the number of types of the apparatus attached to the main apparatus as an option, have been discussed separately. However they can also be performed in combination.

More specifically, if each optional program in the embodiment of (i) is designated as A, B, C, and each optional program for embodiment of (ii) as a, b,c, then these 6 optional programs can be combined to obtain Aa, Ab, Ac, Ba, Bb, Bc, Ca, Cb, Cc. This is to say, after the hardware complexity level for (i) is discriminated according to the hardware complexity level information set by the setting panel 14 (e.g. level B of (i) is discriminated), then the hardware complexity level for aforementioned (ii) is discriminated (e.g. level b of (ii) is discriminated). Thus desired combination of optional programs (e.g. optional program Bb) can be selected.

| Cf. (i) / (ii) | A | B | C |
|---|---|---|---|
| a | Aa | Ba | Ca |
| b | Ab | Bb | Cb |
| c | Ac | Bc | Cc |

0100240

-13-

Claims:

1. A system creation method employed by a system comprising a processor, a memory storing a control program executed by the processor, and input/output units, wherein in the method said processor exchanges information with said input/output units in accordance with the control program to execute prescribed processing, characterised in that:

said memory stores a basic program and a plurality of optional programs as the control program, and

said processor discriminates the hardware level complexity of the connected or the to-be-connected input/output units, and thereby decides which of said plural optional programs are to be rendered effective and which ineffective.

2. The system creation method according to claim 1, wherein said processor reads out preset hardware level complexity information in discriminating said hardware complexity level.

3. The system creation method according to claim 1 or 2, wherein said processor detects said connected input/output units and thereby discriminates the hardware complexity level in discriminating said hardware complexity level.

4.      Data processing apparatus comprising a processor, a memory for storing a control program to be executed by the processor, and an input/output control means connected to the processor for use in controlling a plurality of input/output devices in dependence upon the processor when it is in use, whereby the processor can exchange information with said input/output units in accordance with a control program to execute prescribed processing, characterised in that the control program comprises a basic program for executing data processing other than control of said input/output units, and a plurality of optional programs for controlling different respective levels of  hardware complexity in dependence upon input/output units, the apparatus further comprising discriminating means for discriminating a hardware complexity level thereby to decide which of said optional programs are to be rendered effective and which ineffective.

5.      Data processing apparatus according to claim 4, wherein said optional programs are ranked for controlling said input/output units.

6.      Data processing apparatus according to claim 4 or 5, wherein said memory comprises a basic storage area for storing said basic program, and a plurality of option storage areas for storing respective ones of said optional programs.

7.      Data processing apparatus according to any of claims 4 to 6, and comprising a setting panel for

-15-

presetting a hardware complexity level to be discriminated by said discriminating means.

8.      Data processing apparatus according to any one of claims 4 to 7, wherein said discriminating means is operable to discriminate hardware complexity level in accordance with the number of input/output units connected to the input/output control means.

9.      Data processing apparatus according to claim 6, or claim 7 or 8 when appended to claim 6, wherein said discriminating means is operable to set an option storage area corresponding to an optional program which is to be ineffective, as a storage area to which access is forbidden.

10.      A system creation method in which a processor exchanges information with input/output units in accordance with a control program stored in a program memory, comprising:

(a) a plurality of input/output units;

(b) an input/output control device provided between the connected input/output units and said processor for controlling each of the input/output units in response to a command from the processor;

(c)  a program memory having a basic program for executing data processing other than control of the input/output units, and ranked plurality of optional programs for controlling each of the input/output units, said basic program being stored in a basic storage area, each of said optional programs being stored in a corresponding option storage area;

(d)  a setting panel for setting a hardware complexity level at the time of manufacture; and

(e)  means for judging hardware complexity level in accordance with the number of connected input/output units, for deciding which of the plural optional programs are to be rendered effective and which ineffective, and for setting an option storage area, corresponding to an ineffective optional program, as a storage area to which access is forbidden.

# Fig. 1

### (A)

### (B)

### (C)

# Fig. 2

0100240

# Fig.3

# Fig.4

START

Read Hardware
Complexity
Level

A  What is Hardware
Complexity Level ?

| Execute Basic Program M and Optional Program A | Execute Basic Program M and Optional Programs A, B | Execute Basic Program M and Optional Programs A, B, C |

# Fig.5

START

Read Connection
State of Each
I/O Unit

B  What is Option Complexity Level ?

| Execute Basic Program m and Optional Program a | Execute Basic Program m and Optional Programs a, b | Execute Basic Program m and Optional Programs a, b, c |